# EUROPEAN PATENT SPECIFICATION

(11) **EP 1 505 714 B1**
(45) Date of publication and mention of the grant of the patent: **12.08.2015**
(21) Application number: 03723323.6
(22) Date of filing: 12.05.2003
(51) Int. Cl.: H02K 21/22, H02K 21/16, H02K 3/18

(54) **DYNAMO ELECTRIC MACHINE**
ELEKTRISCHE DYNAMOMASCHINE
DYNAMO

(30) Priority: 16.05.2002 JP 2002141961
(43) Date of publication of application: 09.02.2005
(73) Proprietor: Mitsuba Corporation, Kiryu-shi, Gunma 376-8555 (JP)
(72) Inventor: TAKASE, Junichi, Kiryu-shi, Gunma 376-0001 (JP); KAWAGISHI, Masakazu, Ashikaga-shi, Tochigi 326-0845 (JP)
(74) Representative: Hoffmann Eitle
(86) International application number: PCT/JP2003/005871
(87) International publication number: WO 2003/098781

(56) References cited:
- EP-A- 0 291 219
- EP-A- 0 295 718
- JP-A- 2 084 043
- JP-A- 4 289 759
- JP-A- 63 077 363
- JP-A- 2000 308 317
- US-A- 4 315 171
- US-A- 5 164 622
- US-A- 5 442 250
- US-A- 6 137 199
- PATENT ABSTRACTS OF JAPAN vol. 012, no. 418 (E-678), 7 November 1988 (1988-11-07) & JP 63 154052 A (NIPPON FUEROO FURUIDEIKUSU KK), 27 June 1988 (1988-06-27)

## Description

### Technical Field

The present invention relates to a dynamo-electric machine and is applicable to a dynamo-electric machine for connection to, e.g., an engine of a motorcycle and used as a generator or starter motor.

### Background Art

A dynamo-electric machine including, e.g., a generator or a motor is generally constituted by a stator wound with a coil and a rotor provided with a permanent magnet. In the generator, the rotor is rotatively driven by an engine or the like to allow a rotating magnetic field produced by the permanent magnet to intersect with the coil, thereby generating an electromotive force on the stator side. On the other hand, in the motor, energization of the coil produces a rotating magnetic field, thereby rotatively driving the rotor. The above dynamo-electric machine can obtain high output in spite of its simple structure, and therefore are used as, e.g., a generator for a motorcycle, a starter-generator that acts both as a starter and a generator.

EP-A2-0 291 219 discloses a compact three-phase permanent magnet rotary machine having minimal reluctance torque and electromagnetic torque ripple, and maximum energy efficiency and starting torque per unit volume of winding, comprising an armature having 3(2n + 1) ferromagnetic poles and slots and a permanent magnet assembly having 3(2n + 1) +/- 1 permanent magnet poles, where n is an integer of 1 or more. Each of the three phases of the winding comprises multiple coils, each wound about a respective ferromagnetic pole and occupying a pair of slots located immediately on each side of a respective pole. The coils of a particular phase are located within a sector of the circular array of ferromagnetic poles encompassing 2n + 1 poles.

US 6,137,199 discloses a permanent magnet rotor alternator having a one-piece, rotor/hub/flywheel starting gear. Three high remanence ceramic permanent magnets provide a rotor having a contiguous ring of twelve alternating poles which allows for higher alternator efficiency. The magnets are ceramic and are adhesively bound to the rotor hub, which is driven by an extended crankshaft. The rotor rotates within a wound stator assembly of which the laminated stator core is a part of the alternator's frame assembly, and thus, serves as a shield should a rotor magnet come loose.

US 4,315,171 discloses improved step motors for providing linear and angular step-wise motion. The motors utilize a permanent magnet rotor having a multiplicity of equal pitch (equally spaced) permanent magnetic poles of alternating polarity. The stator has a plurality of pole groups, each pole group having a plurality of poles of the same pitch or spacing as the rotor poles, with each stator pole group being displaced with respect to the other stator pole groups, whereby the poles in the pole groups will successively align with the poles in the rotor in a predetermined sequence upon relative rotation between the rotor and stator. Windings are provided on each stator pole group to selectively polarize the stator poles in the respective pole group in alternate polarity to encourage alignment of the nearest rotor poles therewith. All forms of the invention use one or more stator segments, each of substantially less than 360 DEG in arc length to simplify winding thereof and to make better utility of lamination stock. Linear and rotary devices are disclosed. Permanent magnet embodiments disclosed include multiple permanent magnets making up the rotor poles, and a single permanent magnet having shaped pole pieces. A wound rotor embodiment is also disclosed.

EP-A2-0 295 718 discloses a motor which includes an armature and a field magnet which surrounds the armature. The armature includes a plurality of teeth being arranged at equal pitch, and the field magnet includes a plurality of magnetic poles being arranged at equal pitch. When the number of the magnetic poles of the field magnet is "2P" and the number of phases of divided armature windings is "Q", the number T of the teeth is determined in accordance with an equation T = (P+/-N) Q (0 < N < P-2P/Q). In addition, "phase" and "winding direction" of the divided armature windings to be wound on the respective teeth are determined through comparison of an actual angle in electrical degrees of respective one of teeth and an ideal angle in electrical degrees corresponding thereto.

US 5,442,250 discloses high torque brushless motors which have low weight and high efficiency. The permanent magnet rotor has many equally spaced poles of alternating polarity. The stator has a plurality of pole groups, each pole group have a plurality of poles with the same pitch as the rotor poles. Windings connected to electrical phases are provided on the poles within each pole group to polarize the poles in the group with alternating polarity. The pole groups are displaced relative to each other and the gaps between the pole groups are filled by flux balancing poles which in many cases are unwound. The motor may be driven by means of an inverter and by providing it with at least two winding sections of each phase, configuration switches to connect the winding sections in at least one serial and one quasi-parallel configuration and at least twice as many bridgelegs (twice as many inverter switching elements) as would otherwise be required as a minimum in the selected bridge configuration it can be driven at two different torques. The configuration switches may be constructed as very low resistance high current mercury switches having a favorable geometric design.

US 5,164,622 discloses a three phase DC motor including a rotor portion and a stator portion. The rotor portion includes 6N+/-2 permanent magnet poles, and the stator portion includes 6N electromagnet poles where N in an integer. The motor is characterized in that it has a high pole density, thus enabling improved efficiency, while retaining acceptable non constant torque characteristics. Since the motor configuration provides for a symmetrical winding pattern, no asymmetrical radial forces are produced. The configuration further allows for small motor size in the height dimension. A first preferred embodiment of the motor is adapted for three phase power to be connected to the motor windings in a "Y" fashion. An alternate preferred embodiment of the invention has coil windings connected in delta configuration.

JP-A-63154052 discloses a motor to improve the performance by so wiring as to generate a magnetic field in which a pair of armatures have the same polarity of a certain armature of certain phase and another armature adjacent to the certain armature for feeding the current of another phase. A coil winding method of each armature has, in case of a 3-phase motor, the steps of aligning three armatures for feeding currents of the same phase, and winding a coil in opposite directions at each adjacent coil in the same phase. Further, the coils of the phases are so composed that the coil winding directions of the first armatures of three phases are all the same. (The armature nearest to the power source of the three armatures of the three phases is called 'first armature', and the armature nearest to the Y-connection armature is called 'third armature'). Thus, one of three sets of the third armature of one phase and the first armature of adjacent phase always generates a magnetic field of the same polarity each time the rotor rotates by π/3 revolution.

JP 02084043 discloses a thin high torque motor by constructing the motor with one or a plurality of motor units and setting a specific relation between the number of poles, the number of phases and the number of armatures per phase for each motor unit. A motor is constructed with one or a plurality of motor units, and a relation P=M.N+ or -1 is set between the number of pole P, the number of phase M and the number of armature per phase N. (The case where M.N=9 and P=10 for the number of motor unit=2 is excluded.) Fixed armatures and a rotor are arranged in a frame such that the rotor rotates on the outer circumferences of the fixed armatures. Poles N, S are divided equally into eight, for example, on the inner circumferential face of the rotor and arranged alternately such that each pole occupies the angle of 36 deg./8=45 deg.. The rotor is constituted with a permanent magnet or an armature applied with a DC coil. Nine slots are made in the outer circumference of the stator and armatures applied with coils are arranged on nine teeth at the side of the slots.

JP63077363 discloses a high-efficiency motor to simplify the structure, and to improve the efficiency of a motor by bringing the number of rotors and the number of stators to mutually prime numbers or integer times thereof, equalizing angles occupying at a central angle of both the rotors and the stators and winding one coil on one pole in an armature. A rotor consisting of permanent magnets has eight poles, an armature composed of poles and coils is used as a stator and has six poles, and the numbers of both the rotors and the stators are represented by twice as large as four to three as mutually prime numbers. The coils are wound on the adjacent armatures so that currents are conducted in the opposite direction. Angles phi occupying at a central angle of each stator are equalized to those of the rotors, and constituted so that all the angles are brought to 45 deg.. Accordingly, the positional relationship of the stators and the rotors is displaced positively at any position of the whole circumference of a motor at all times, thus smoothly starting the rotors at any position of the rotors normally, then efficiently converting currents into power.

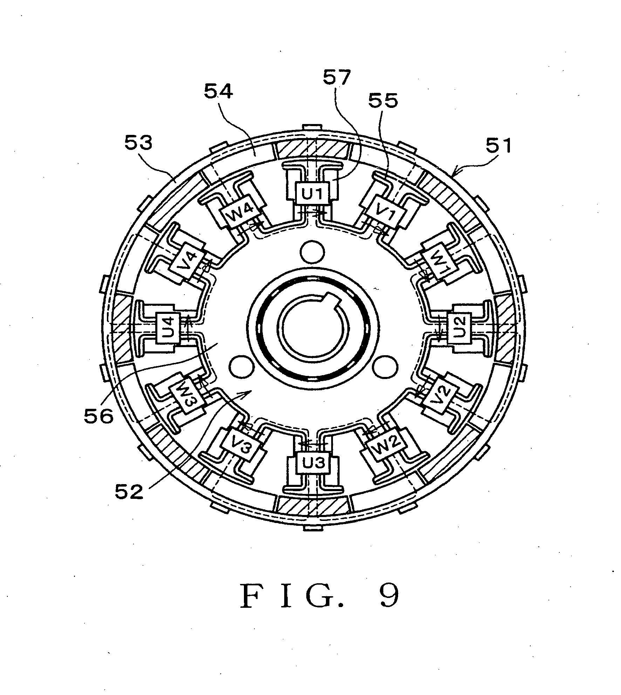

FIG. 9 of the accompanying drawings is an explanatory view showing a configuration related to a stator and a rotor of a conventional dynamo-electric machine. The dynamo-electric machine of FIG. 9 is a three-phase (U, V, W) type, and has an outer rotor structure in which a rotor 51 is disposed outside a stator 52. The rotor 51 is connected to, e.g., a crankshaft of an engine and is rotatably disposed outside the stator 52. The rotor 51 is provided with a rotor yoke 53 made of a magnetic material. A plurality of permanent magnets 54 are fixed to the inner circumferential surface of the rotor yoke 53 along the circumferential direction thereof. The stator 52 is provided with a stator core 56 having a plurality of salient poles 55 wound with a coil 57.

In the conventional three-phase dynamo-electric machine, the coil 57 of the stator core 56 is continuously wound around every third pole (salient pole 55), as shown in FIG. 9. The every third pole wound with the coil 57 of the same phase face a magnet having the same polarity as the pole at the same electric angle. In FIG. 9, every third pole, for example, U-phase poles U1 to U4 face N-pole permanent magnets 54 on the central axes thereof. Therefore, in the conventional dynamo-electric machine, the permanent magnets 54 and salient poles 55 are arranged at regular intervals, respectively. That is, the permanent magnets 54 are evenly divided into N-pole magnets and S-pole magnets, and the number of poles N is denoted by 2n. The salient poles 55 are also evenly divided, and the number of poles M on the stator side is denoted by 3m in the case of a three-phase type. Here, n is equal to or an integral multiple of m. In the case of the dynamo-electric machine shown in FIG. 9, the number of poles N of the permanent magnets 54 is 16 (n = 8), and the number of poles M on the stator side is 12 (m = 4; n = 2m).

However, when the above conventional dynamo-electric machine is used as a generator for a motorcycle to ensure current generated in an idling rotation range as much as possible, generated current in a middle to high rotation level becomes larger than a consumption current of the machine, resulting in redundant current. The generation of the redundant current correspondingly increases engine friction (engine load) to lead to unfavorable mileage or loss of horsepower. Further, in the generator itself, heat generated in the coil is increased up to close to its heat resistance limit.

In order to cope with the redundant current, the number of turns of the coil is increased, or the thickness of the stator core is increased to obtain larger coil inductance. This suppresses the current generated in a middle to high rotation level, thereby reducing coil temperature. However, it is now impossible to significantly increase the number of turns of the coil in view of the available winding space. Further, restrictions on the design of a car body make it impossible to increase the thickness of the stator core. Thus, under existing circumstance, various types of forced cooling mechanisms are employed to squirt engine oil, form a cooling groove, or the like, thereby reducing the heat generated in the coil. However, when the above countermeasures are employed, it becomes impossible to obtain high output, which is demanded due to future load increase, unless the size of the generator itself is increased. It is difficult to increase the size of the generator in the situation where the miniaturization of the machine is requested. Thus, there has been a need to develop a dynamo-electric machine capable of increasing current amount in a low rotation level and, at the same time, suppressing current generated in a middle to high rotation level while maintaining the current machine size.

An object of the present invention is to provide a dynamo-electric machine capable of increasing current amount in a low rotation level and, at the same time, suppressing current generated in a middle to high rotation level to reduce heat generated in a coil while maintaining the current machine size.

According to one aspect of the present invention, there is provided a dynamo-electric machine comprising a stator having salient poles each wound with a coil; a rotor rotatably disposed on one of an outer circumference and an inner circumference of said stator, said rotor having permanent magnets fixed thereto along a circumferential direction thereof; and two pole-pair groups disposed point-symmetrically with respect to a center of said stator, with space for allowing an additional arrangement of salient poles being defined between said two pole-pair groups, wherein each one of said two pole-pair groups includes pole pairs each composed of circumferentially adjacent ones of said salient poles that are of the same phase, with each of said circumferentially adjacent ones of said salient poles facing one of said permanent magnets that is different in polarity relative to the one of said permanent magnets that is faced by another of said circumferentially adjacent ones of said salient poles, with said circumferentially adjacent ones of said salient poles that are of the same phase facing respective ones of said permanent magnets at the same electric angle, and with the number of pole-pairs being equal in number to the number of phases, wherein an angle θ1 between said circumferentially adjacent ones of said salient poles that are of the same phase is equal to 360°/N, and an angle θ2 between circumferentially adjacent ones of said salient poles that are not of the same phase is equal to θ1+ (θ1/P), with P being the number of phases and N being the number of poles of said permanent magnets, and wherein an angle X of said each one of said two pole-pair groups is equal to an integral multiple of an arrangement interval of said permanent magnets.

Other embodiments of the present invention are set out in the dependent claims.

### Brief Description of Drawings

FIG. 1 is a cross-sectional view showing a configuration of a dynamo-electric machine according to the first embodiment of the present invention;
FIG. 2 is an explanatory view showing a positional relationship between the rotor and stator in the dynamo-electric machine of FIG. 1;
FIG. 3 is an explanatory view showing a positional relationship between the rotor and the stator in the dynamo-electric machine according to the second embodiment of the present invention;
FIG. 4 is an explanatory view showing a positional relationship between the rotor and the stator in the dynamo-electric machine according to first background example;
FIG. 5 is an explanatory view showing a positional relationship between the rotor and the stator in the dynamo-electric machine according to third embodiment of the present invention;
FIG. 6 is an explanatory view showing the case where the salient poles are added to the configuration of the dynamo-electric machine of FIG. 5;
FIG. 7 is an explanatory view showing a positional relationship between the rotor and the stator in the dynamo-electric machine according to fourth embodiment of the present invention;
FIG. 8 is an explanatory view showing the case where the salient poles are added to the configuration of the dynamo-electric machine of FIG. 7; and
FIG. 9 is an explanatory view showing a configuration related to a stator and rotor of a conventional dynamo-electric machine.

The following describes a dynamo-electric machine which comprises a stator having a plurality of salient poles wound with a coil; and a rotor rotatably disposed on the outer or inner circumference of the stator and having a plurality of permanent magnets fixed thereto along the circumferential direction so as to face the salient poles. The salient poles of the same phase are adjacently disposed in the circumferential direction, and the adjacently disposed salient poles face the permanent magnets having opposite polarities to each other at the same electric angle, the adjacently disposed salient poles of the same phase constitute a pole-pair, and two pole-pairs groups, each of which is constituted by the pole-pairs corresponding to the numbers of phases, are disposed point-symmetrically with respect to the center of the stator, and a space for allowing additional arrangement of salient poles are formed between the pole-pairs groups.

In the dynamo-electric machine which is allowed to function as a generator, it is possible to make a magnetic path caused between the salient poles of the pole-pair at the time of power generation shorter than in the case of the dynamo-electric machine having the same pole numbers of the permanent magnets to make coil inductance larger than coil inductance in the dynamo-electric machine having the same pole numbers of the permanent magnets.

Further, in the dynamo-electric machine which is allowed to function as a generator, magnetic paths are formed between the salient poles of the pole-pair and between the salient poles of adjacently disposed pole-pair, and the number of fluxes formed between the salient poles of the pole-pair can be greater than fluxes formed between the salient poles of adjacently disposed pole-pair.

The dynamo-electric machine has a configuration in which the salient poles of the same phase are adjacently disposed to allow respectively face the permanent magnets having opposite polarities to each other at the same electric angle. This allows the magnetic path to be shortened as well as the number of the effective fluxes to be increased. It is, thus, possible to suppress output in a middle to high rotation level to reduce coil temperature, and can increase output in a low rotation level, while maintaining the size corresponding to that of the conventional generator. Therefore, it is possible to significantly reduce the heat of the coil while maintaining output performance equivalent to or superior to the conventional generator, which reduces the engine friction to allow engine mileage to be increased and horse power loss to be prevented. Further, it is possible to obtain high output of the generator while the size of the generator is maintained. This allows the dynamo-electric machine of the present invention to cope with further increase in load in a motorcycle or the like without increasing the physical size of the machine and adding any forced cooling mechanism. Furthermore, the salient poles of the same phase are disposed point-symmetrically with respect to the center of the stator, realizing a favorable magnetic balance at the time of rotation. As a result, effective rotation can be achieved.

In the dynamo-electric machine, each of the adjacently disposed salient poles of the same phase may have coils wound in the reverse directions. The value of angle θ1 between the adjacently disposed salient poles of the same phase may be set at 360°/ N, and the value of angle *θ*2 between the adjacently disposed salient poles of different phases may be set at *θ*1 + *θ*1 / number of phases P, where N is the number of poles of the permanent magnets. Further, in the dynamo-electric machine number of phases P x (*θ*1 + *θ*2) is set at 180° or less.

It is possible to form a pole-pair with the adjacently disposed salient poles having the same phase, and to additionally dispose the salient poles between the pole-pair, thereby realizing augmentation of output of the dynamo-electric machine. Further, it is possible to form a pole-pair with the adjacently disposed salient poles having the same phase, and to dispose two pole-pairs groups, each of which is constituted by the pole-pairs corresponding to the numbers of phases, in a point-symmetrical position with respect to the center of the stator. In this case, the salient poles can be disposed between the pole-pairs groups.

Further, the dynamo-electric machine may be an outer-rotor type in which the stator is disposed at the inside of the rotor, or an inner-rotor type in which the rotor is disposed at the inside of the stator.

In addition, the dynamo-electric machine may be a generator, a motor, or starter-generator for a motorcycle.

### (First Embodiment)

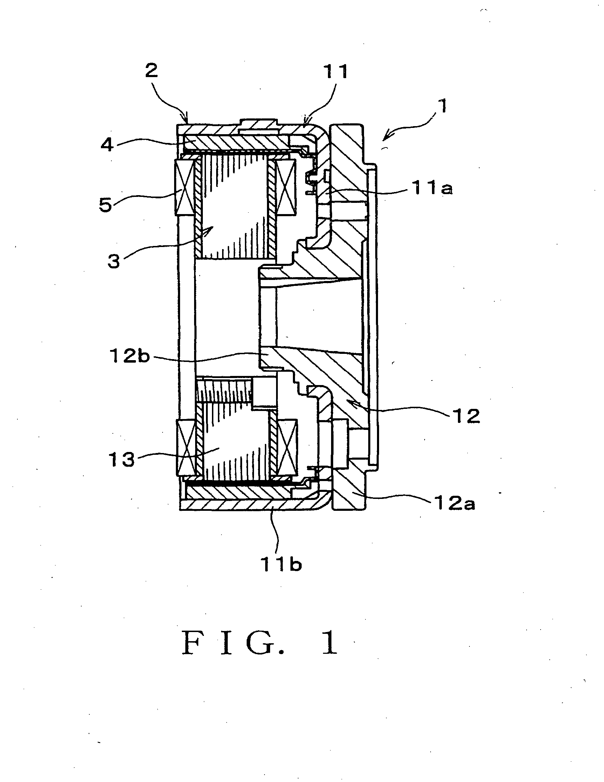

Embodiments of the present invention will be described below in detail with reference to the accompanying drawings. FIG. 1 is a cross-sectional view showing a configuration of a dynamo-electric machine according to the first embodiment of the present invention. The dynamo-electric machine 1 of FIG. 1 is a so-called outer-rotor type dynamo-electric machine, and is used as an ACG (Alternating-Current Generator) in, e.g., a motorcycle. The generator shown in FIG. 1 roughly includes a rotor 2 and a stator 3. Here, the rotor 2 acts as a magnetic-field generator and the stator 3 acts as an armature. A permanent magnet 4 is attached to the rotor 2, and a coil 5 is attached to the stator 3. When the rotor 2 rotates at the outside of the coil 5, a rotating magnetic field produced by the permanent magnet 4 intersects with the coil 5 to generate an electromotive force in the coil 5, thereby performing power generation.

The rotor 2 is connected to a crankshaft (not shown) of an engine. The rotor 2 is rotatably disposed outside the stator 3, and also functions as a flywheel. The rotor 2 is provided with a rotor yoke 11 having a closed-bottomed cylindrical shape and a boss rotor 12 attached to the rotor yoke 11 and fixed to the crankshaft. The rotor yoke 11 and boss rotor 12 are made of a magnetic material such as an iron. The boss rotor 12 includes a plate-shaped flange portion 12a and a boss portion 12b having substantially a cylindrical shape. The flange portion 12a is concentrically attached to a bottom portion 11a of the rotor yoke 11. The boss portion 12b projects from the flange portion 12a along the rotation center line and is taper coupled to the crankshaft. A rotation of the crankshaft rotates the boss portion 12b to cause the rotor 2 to be rotated outside the coil 5.

On the inner circumferential surface of a cylindrical portion 11b of the rotor yoke 11, a plurality of permanent magnets 4 are arranged along the circumferential direction of the rotor yoke 11. The permanent magnets 4, here 16 magnets are arranged at intervals of 22° 30' in even shares such that N-poles and S-poles are alternately arranged as polarities on the inner surface side. That is, the number of poles N of the permanent magnets 4 is 16 (n = 8), as in the case of the dynamo-electric machine of FIG. 9.

The stator 3 includes a stator core 13 formed by stacking a plurality of steel plates. Formed on the stator core 13 are a plurality of salient poles 14 around each of which a coil 5 is wound. The dynamo-electric machine 1 is a generator that generates three-phase alternating current, in which four salient poles 14 are assigned to each of the phases U, V, and X, and the number of poles M on the stator 3 side is 12 (M = 3m; m = 4).

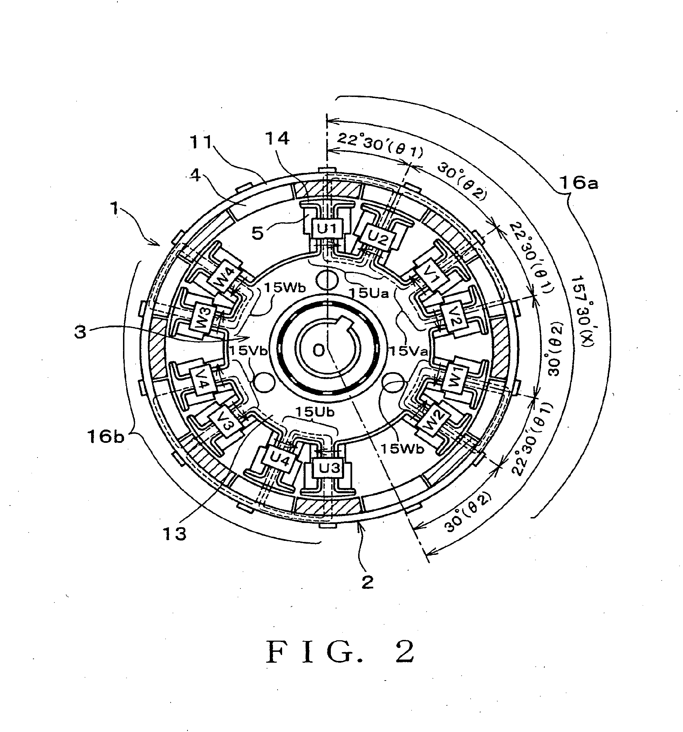

Unlike the case of the conventional dynamo-electric machine shown in FIG. 9, the salient poles 14 are not arranged at regular intervals in the dynamo-electric machine 1. FIG. 2 is an explanatory view showing a positional relationship between the rotor 2 and the stator 3 in the dynamo-electric machine 1. As shown in FIG. 2, the salient poles 14 having the same phase are adjacently disposed in the circumferential direction. The adjacently disposed salient poles 14, which have the same phase, respectively face the permanent magnets 4 having opposite polarities to each other at the same electric angle. The winding directions of the coil 5 in the adjacently disposed salient poles 14 of the same phase are opposed to each other as shown by arrows in FIG. 2 in correspondence with the polarities exhibited by the permanent magnets 4 that face the salient poles 14.

A concrete description will be given of U-phase, for example. Salient pole U1 (hereinafter, salient poles are denoted by only using symbols. For example, salient pole U1 is referred to as merely "U1") and U2 of U-phase are adjacently disposed to form a pole-pair 15Ua. The angle θ1 between U1 and U2 is set at 22° 30' (360°/N; N = 16), which corresponds to the arrangement interval of the permanent magnets 4, so that U1 and U2 simultaneously face N-pole and S-pole on their central axes, respectively. The winding directions of the coil 5 in U1 and U2 are opposed to each other.

Similarly, V1 and V2 of V-phase, W1 and W2 of W-phase are adjacently disposed to form pole-pairs 15Va and 15Wa, respectively. In the pole pairs 15Va and 15Wa, the angles θ1 between the adjacent salient poles of same phase are set at 22° 30' so as to face the permanent magnets 4 having opposite polarities to each other at the same electric angle, respectively. The winding directions of the coil 5 are opposed to each other between V1 and V2, and W1 and W2. These pole-pairs 15Ua, 15Va, and 15Wa corresponding to three phases constitute one pole-pairs group 16a.

On the other hand, the angle θ2 between the adjacent salient poles of different phases (for example, between U2 and V1) is set at θ1 + θ1/ number of phases P. That is, the angle θ2 between the adjacent salient poles of different phases is obtained by adding an angle value calculated by dividing θ1 between the adjacent salient poles of the same phase by the number of phases P to θ1. θ1 is equal to the arrangement interval of the permanent magnet 4. When a value obtained by dividing θ1 by the number of phases is added to θ1 to obtain θ2, the angle X of the pole-pairs group 16a is an integral multiple of the arrangement interval of the permanent magnets 4 since the number of pole-pairs included in the pole-pairs group 16a is equal to that of phases. When the angle X (= number of phases P x (θ1 + θ2)) of the pole-pairs group is equal to or less than 180°, another pole-pairs group can be disposed on the stator 3.

In the case of FIG. 2, θ2 is set at 30° (= 22° 30' + 22° 30' / 3). The angle X of the pole-pairs group 16a is 157° 30' (= 3 x (22° 30' + 30°)), which is equal to or less than 180°. Therefore, another pole-pairs group can be disposed on the stator 3. That is, another pole-pairs group 16b including pole-pairs 15Ub, 15Vb, and 15Wb is disposed such that the pole-pairs groups 16a and 16b are point-symmetric with respect to a center point O of the stator 3. In the pole-pairs group 16b, values of θ1, θ2, and X are set at exactly the same values as those in the pole-pairs group 16a.

As shown in FIG. 2, when U1 and U2 face the permanent magnets 4 having the opposite polarities to each other at the same electric angle, respectively, U3 and U4 face the permanent magnets 4 having the opposite polarities to each other at the same electric angle, respectively, too. The same relations between V1 and V2, W1 and W2 are applied to those between other salient poles V3 and V4, W3 and W4.

In the above dynamo-electric machine 1, a magnetic path caused at the time of power generation is formed between U1 and U2, U2 and V1, or the like, as shown in FIG. 2. The angle between the salient poles U1 and U2 is 22° 30', as described above. In this case, the magnetic path between U1 and U2 is shorter than in the case of FIG. 9 (30°). Since coil inductance is in inverse proportion to the length of magnetic path in general, coil inductance in the dynamo-electric machine 1 of FIG. 2 is larger than coil inductance in the dynamo-electric machine of FIG. 9. That is, it is possible to increase coil inductance without increasing the number of turns of the coil or the stacked thickness of the stator core. Therefore, it becomes possible to suppress the current generated in a middle to high rotation level of an engine, and to reduce the temperature of the coil 5.

According to the experiment of the present inventors, an output of 16.4A and a coil temperature of 80°C were obtained at a rotation rate of 5,000RPM in the case of the configuration shown in FIG. 9. Whereas the configuration of FIG. 2 brought the output and coil temperature down to 14.8A and 62°C with the same rotation rate of 5,000RPM.

It is assumed that two fluxes are generated in one salient pole. Considering this as a reference, two fluxes are generated between U1 and U2, and one flux is generated between U2 and V1 in the dynamo-electric machine of FIG. 2. Therefore, in terms of U-phase, two fluxes are passed through each of U1 and U3 and three fluxes are passed through each of U2 and U4 as shown in FIG. 2, with the result that the total number of the fluxes generated in U-phase becomes ten. On the other hand, in the case of the configuration of FIG. 9, two fluxes are respectively passed through each of U1, U2, U3, and U4 with the result that the total number of the fluxes generated in U-phase becomes eight. That is, larger numbers of effective fluxes are obtained in each phase in the dynamo-electric machine 1 of FIG. 2 as compared to the conventional dynamo-electric machine, thereby increasing output in a low rotation level.

According to the experiment of the present inventors, flux density per one salient pole was 10,200Mx in the configuration of FIG. 9, whereas the flux density was increased to 10,700Mx in the configuration of FIG. 2, which corresponds to an increase of 2,000Mx with four salient poles. Accordingly, an output of 2.6A was obtained with 1,500RPM in the configuration of FIG. 9, whereas an output of 3.4A was obtained with the same 1,500RPM in the configuration of FIG. 9.

As described above, the configuration of the dynamo-electric machine 1 can suppress output in a middle to high rotation level to reduce coil temperature, and can increase output in a low rotation level, while maintaining the size corresponding to that of the conventional dynamo-electric machine. Therefore, it is possible for the dynamo-electric machine of the present embodiment to significantly reduce the heat of the coil while maintaining output performance equivalent to or superior to the conventional generator, which reduces the engine friction to allow engine mileage to be increased and horse power loss to be prevented. Further, it is possible to obtain high output of the generator while the size of the generator is maintained. This allows the dynamo-electric machine of the present embodiment to cope with increase in load in a motorcycle or the like without increasing the physical size of the machine and adding any forced cooling mechanism.

### (Second Embodiment)

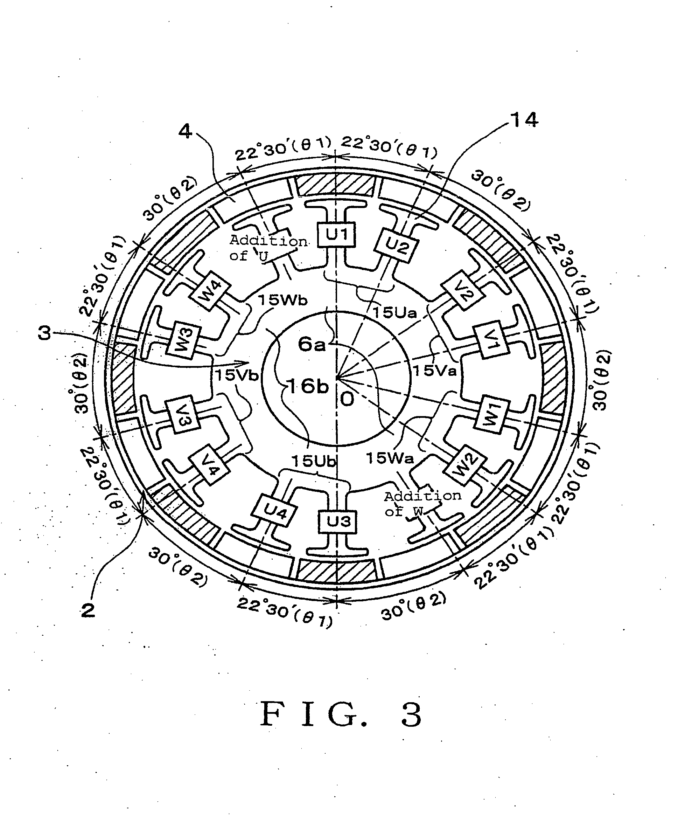

Next, a description will be given of the dynamo-electric machine obtained by adding the salient poles to that shown in FIG. 2, as a second embodiment. FIG. 3 is an explanatory view showing a positional relationship between the rotor 2 and the stator 3 in the dynamo-electric machine according to the second embodiment of the present invention. Note that in the following embodiments, the same reference numerals as the first embodiment are given to the components which are common to the first embodiment, and the overlapped description is omitted. Further, as to the configuration of the stator 3, only basic structure is shown with minor details omitted in order to make the overall structure clearer.

In the dynamo-electric machine of FIG. 2, the angle X of the pole-pairs group 16a is 157° 30', and 22° 30' is obtained as the residual angle by subtracting this 157° 30' from 180°. The obtained residual angle corresponds to the aforementioned θ1, so that spaces to dispose additional salient poles exist at both ends between the pole-pairs groups 16a and 16b, as shown in FIG. 2. When θ1 is equal to or less than 180° - X (180° - X ≧ θ1), two salient poles can additionally be disposed. When 2θ1 is equal to or less than 180° - X (180° - X ≧ 2θ1), four salient poles can additionally be disposed. When 3θ1 is equal to or less than 180° - X (180° - X ≧ 3θ1), six salient poles can additionally be disposed.

In the dynamo-electric machine shown in FIG. 3, U-phase salient pole and W-phase salient pole are additionally disposed in the upper and lower spaces of FIG. 3 respectively, so as to obtain further increase in output. According to the experiment of the present inventors, outputs of 3.4A, 14.8A were obtained respectively with 1,500RPM and 5,000RPM in the configuration of FIG. 2, whereas outputs were increased to 5.9A, 15A with 1,500RPM and 5,000RPM, respectively in the configuration of FIG. 3. In this case, since output in a high rotation level is suppressed due to increase in inductance, increase in output in a low rotation level is noticeable, thereby realizing effective augmentation of output while suppressing temperature rise.

The salient pole to be added is not limited to U-phase or W-phase, and the V-phase salient pole may be added. Further, although the salient poles of different phases are added in the case of FIG. 3, it is possible to add the salient poles of the same phase (for example, two U-phase salient poles may be added to the configuration of FIG. 3).

### (First Background Example)

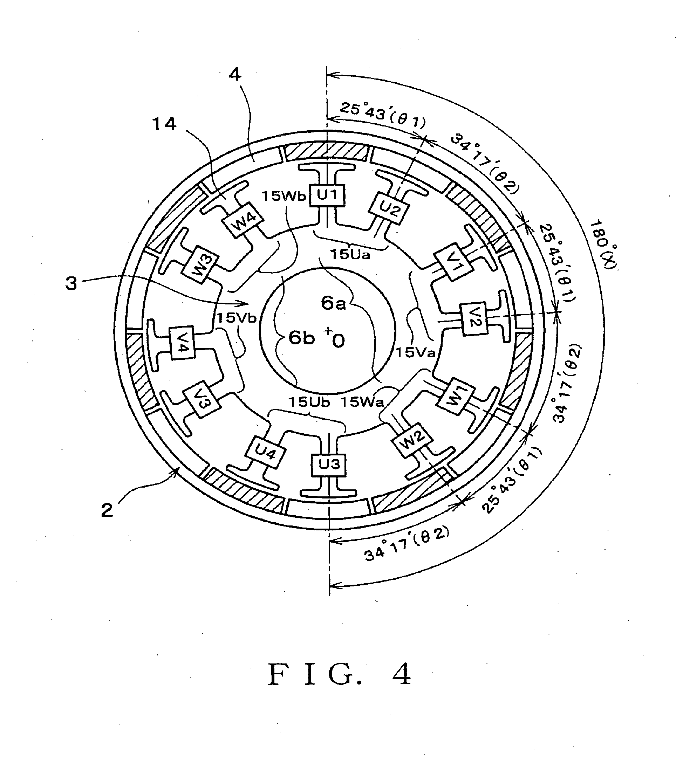

As a first background example, a dynamo-electric machine having 14 poles of permanent magnets and 12 salient poles will be described. FIG. 4 is an explanatory view showing a positional relationship between the rotor 2 and the stator 3 in the dynamo-electric machine according to the first background example.

In the dynamo-electric machine shown in FIG. 4, 14 permanent magnets 4 are equally spaced at intervals of 25° 43' (N = 14; n = 7). The number of the salient poles 14 disposed on the stator 3 side are 12 (M = 3m; m = 4). The value of *θ*1 is set at 25° 43' (360° / N; N = 14), which corresponds to the arrangement interval of the permanent magnets 4. The value of *θ*2 is set at 34° 17' (= 25° 43' + 25° 43' / 3). The angle X of the pole-pairs group 16a is equal to 180° (= 3 x (25° 43' + 34° 17')). In this case, the angle X (180°) from 180° leaves 0°, so that the salient pole cannot be added.

### (Third Embodiment)

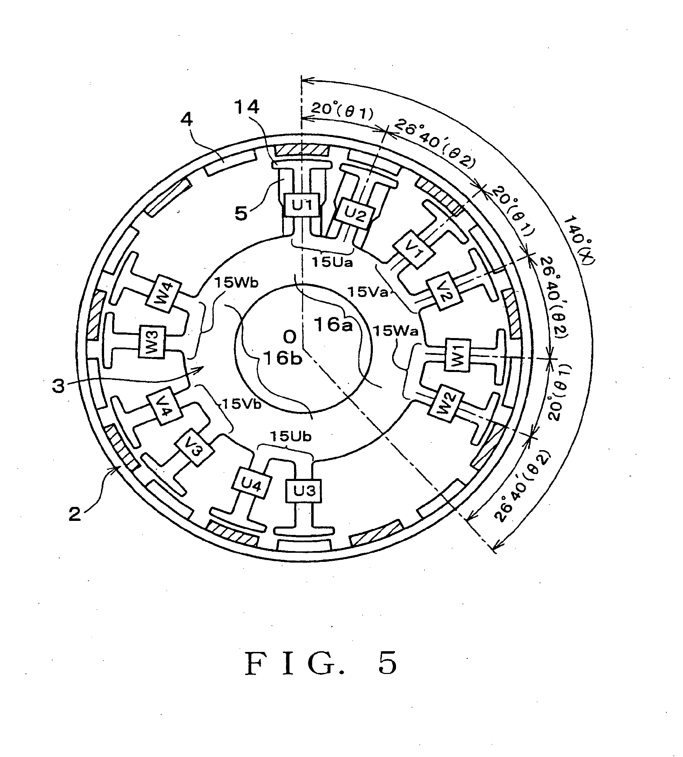

As a third embodiment, a dynamo-electric machine having 18 poles of permanent magnets and 12 salient poles will be described. FIG. 5 is an explanatory view showing a positional relationship between the rotor 2 and the stator 3 in the dynamo-electric machine according to the third embodiment of the present invention.

In the dynamo-electric machine shown in FIG. 5, 18 permanent magnets 4 are equally spaced at intervals of 20° (N = 18; n = 9). The value of θ1 is also set at 20° (360° / N; N = 18). The value of 02 is set at 26° 40' (= 20° + 20° /3). The angle X of the pole-pairs group 16a is equal to 140° (= 3 x (20° + 26° 40')).

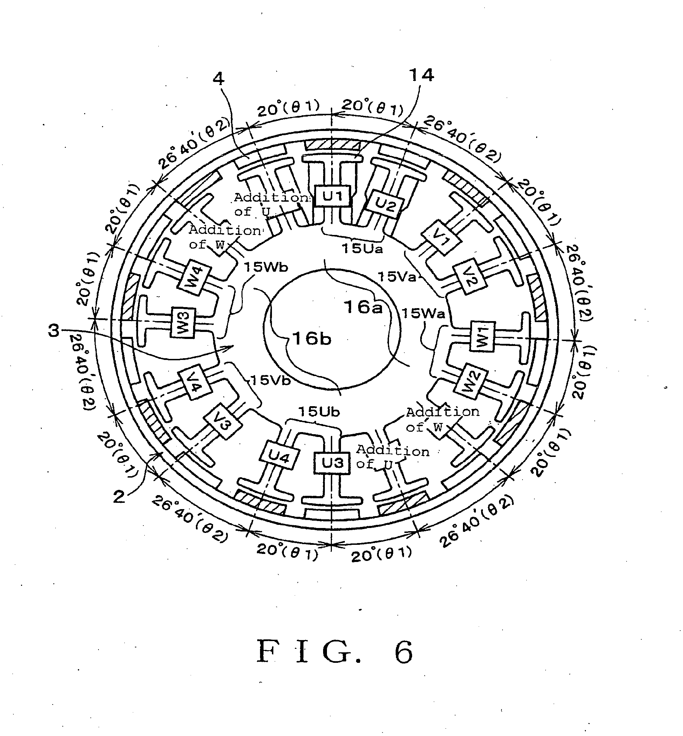

In the case of FIG. 5, 180° - X = 180° - 140° = 40° ≧ 2θ1 is satisfied, so that four salient poles can be added. FIG. 6 is an explanatory view showing the case where the salient poles are added to the configuration of the dynamo-electric machine of FIG. 5. In this case, one pair of U- and W-phase salient poles 14 is respectively added to two spaces formed between the pole-pairs groups 16a and 16b, thereby realizing effective augmentation of output.

### (Fourth Embodiment)

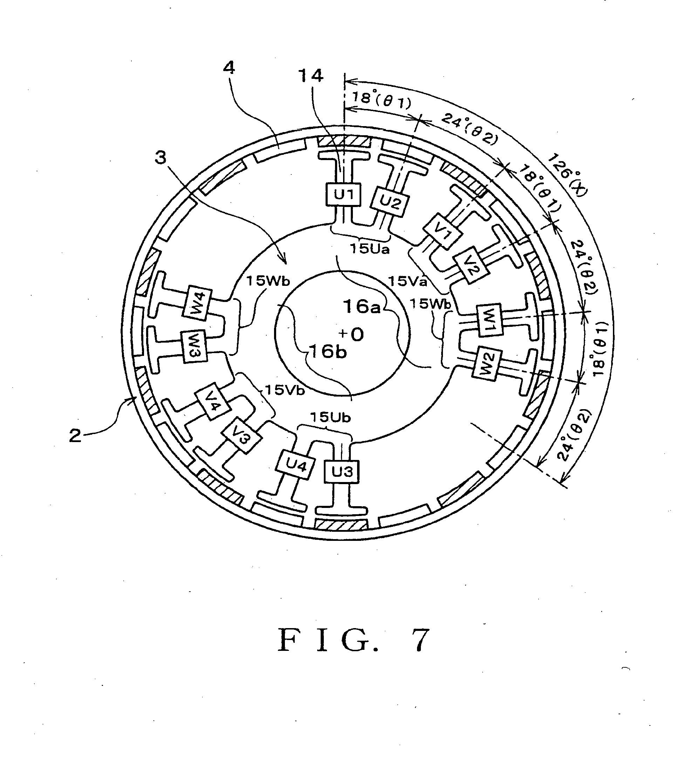

As a fourth embodiment, a dynamo-electric machine having 20 poles of permanent magnets and 12 salient poles will be described. FIG. 7 is an explanatory view showing a positional relationship between the rotor 2 and the stator 3 in the dynamo-electric machine according to the fourth embodiment of the present invention.

In the dynamo-electric machine shown in FIG. 7, 20 permanent magnets 4 are equally spaced at intervals of 18° (N = 20; n = 10). The value of θ1 is also set at 18° (360° / N; N = 20). The value of θ2 is set at 24° (= 18° + 18° / 3). The angle X of the pole-pairs group 16a is equal to 126° (= 3 x (18° + 24°).

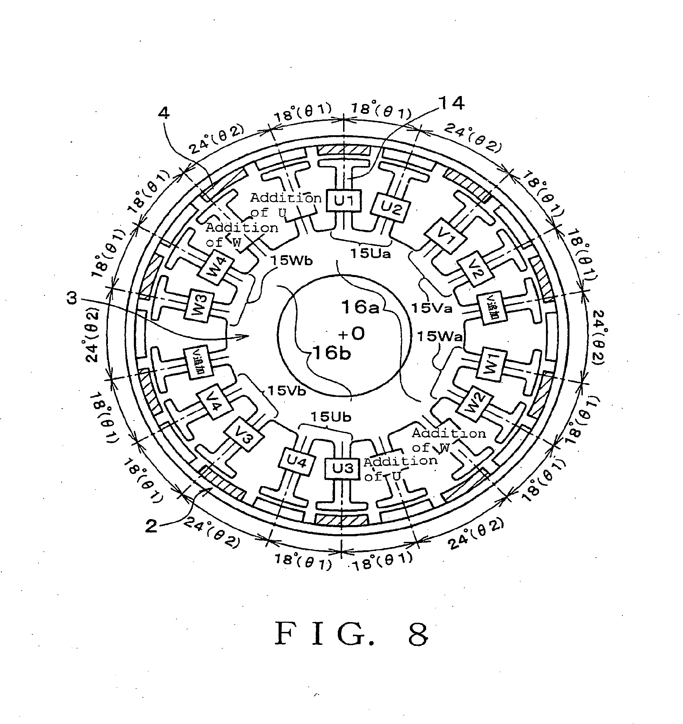

In the case of FIG. 7, 180° - X = 180° - 126° = 54° ≥ 3θ1 is satisfied, so that 6 salient poles 14 can be added as described above. FIG. 8 is an explanatory view showing the case where the salient poles are added to the configuration of the dynamo-electric machine of FIG. 7. In this case, salient poles 14 are added to not only between the pole-pairs groups 16a and 16b, but to between the pole-pairs of each of the pole-pairs groups. That is, two pairs of U-and W-phase salient poles 14 are added respectively to between the pole-pairs group 16a and 16b (between pole-pairs 15Ua and 15Wb, and between pole-pairs 15Wa and 15Ub). In addition, one V-phase salient pole 14 is each added to between the pole-pairs 15Va and 15Wa, and pole-pairs 15Vb and 15Wb. In other words, in FIG. 8, 6 salient poles 14 are respectively added to the positions next to the pole-pairs 15Ua, 15Va, 15Wa, 15Ub, 15Vb, and 15Wb.

It goes without saying that the present invention is not limited to the above embodiments, and various changes may be made without departing from the scope of the invention.

For example, it is possible for the dynamo-electric machine to perform power generation with only one pole-pairs group 16a, and it is not always necessary that the pole-pairs group 16b to be paired be added. Therefore, if the angle X exceeds 180°, the configuration of embodiments of the present invention can be realized. Further, in the case where the number of the permanent magnets 4 is less than 14 poles (for example, 12 poles), the configuration of embodiments of the present invention can also be realized. Furthermore, it is not always necessary that the pole-pairs 15Ua included in the pole-pairs group 16a have a plurality of salient poles 14. For example, the configuration in which a pole-pair is formed in U- and V-phase and a single pole is formed as W-phase can be employed. That is, the pole-pair in embodiments of the present invention can be constituted not only by a plurality of salient poles, but a single salient pole.

In the above embodiments, the dynamo-electric machine is used as a generator. Alternatively, however, it is possible to employ the dynamo-electric machine of embodiments of the present invention as a motor. Further, embodiments of the present invention can be applied to a machine functioning both as a generator and motor, such as an ACG starter for a motorcycle. In the case where the dynamo-electric machine of the present invention is used as a motor, it is possible to realize a motor in which heat of the coil can be significantly reduced with an output equal to or more than an output of the conventional motor. Further, it is possible to increase motor output (torque) while maintaining the same size as that of the conventional motor. In addition, although the dynamo-electric machine of embodiments of the present invention is applied to a generator for a motorcycle in the above embodiment, it is possible to apply embodiments of the present invention to a generator or motor for other uses.

In the above embodiment, the dynamo-electric machine of the present invention is applied to an outer-rotor type dynamo-electric machine. Alternatively, however, embodiments of the present invention may be applied to a so-called inner-rotor type dynamo-electric machine in which the rotor is disposed at the inside of the stator. Further, although three-phase dynamo-electric machine is described in the above embodiment, it is possible to apply the present invention to other phase dynamo-electric machine including, for example, five-phase dynamo-electric machine.

### Industrial Applicability

According to embodiments of the present invention, the dynamo-electric machine has obtained the configuration in which the salient poles of the same phase are adjacently disposed to allow respectively face the permanent magnets having opposite polarities to each other at the same electric angle. This allows the magnetic path to be shortened as well as the number of the effective fluxes to be increased. It is, thus, possible to suppress output in a middle to high rotation level to reduce coil temperature, and can increase output in a low rotation level, while maintaining the size corresponding to that of the conventional generator. Therefore, it is possible to significantly reduce the heat of the coil while maintaining output performance equivalent to or superior to the conventional generator, which reduces the engine friction to allow engine mileage to be increased and horse power loss to be prevented. Further, it is possible to obtain high output of the generator while the size of the generator is maintained. This allows the dynamo-electric machine of embodiments of the present invention to cope with increase in load in a motorcycle or the like without increasing the physical size of the machine and adding any forced cooling mechanism.

Further, according to the configuration of the dynamo-electric machine of embodiments of the present invention, a pair-pole is constituted by adjacently disposed salient poles of the same phase and additional salient poles can be disposed between the pole-pairs, thereby realizing further augmentation of output in the dynamo-electric machine.

## Claims

1. A dynamo-electric machine (1) comprising:
a stator (3) having salient poles (14) each wound with a coil (5);
a rotor (2) rotatably disposed on one of an outer circumference and an inner circumference of said stator (3), said rotor (2) having permanent magnets (4) fixed thereto along a circumferential direction thereof; and
two pole-pair groups (16a, 16b) disposed point-symmetrically with respect to a center (0) of said stator (3), with space for allowing an additional arrangement of salient poles being defined between said two pole-pair groups,
wherein each one of said two pole-pair groups (16a, 16b) includes pole pairs (15Ua, 15 Va, 15 Wa; 15 Ub, 15 Vb, 15 Wb) each composed of circumferentially adjacent ones of said salient poles (14) that are of the same phase, with each of said circumferentially adjacent ones of said salient poles facing one of said permanent magnets (4) that is different in polarity relative to the one of said permanent magnets that is faced by another of said circumferentially adjacent ones of said salient poles, with said circumferentially adjacent ones of said salient poles that are of the same phase facing respective ones of said permanent magnets at the same electric angle, and with the number of pole-pairs being equal in number to the number of phases,
wherein an angle θ1 between said circumferentially adjacent ones of said salient poles (14) that are of the same phase is equal to 360°/N, and an angle θ2 between circumferentially adjacent ones of said salient poles (14) that are not of the same phase is equal to θ1+(θ1/P), with P being the number of phases and N being the number of poles of said permanent magnets, and
wherein an angle X of said each one of said two pole-pair groups (16a, 16b) is equal to an integral multiple of an arrangement interval of said permanent magnets.

2. The dynamo-electric machine according to claim 1, wherein
a winding direction of the coil (5) wound around said each of said circumferentially adjacent ones of said salient poles (14) is opposite to a winding direction of the coil wound around said another of said circumferentially adjacent ones of said salient poles.

3. The dynamo-electric machine according to claim 2, wherein
Px(θ1+θ2) is equal to or less than 180°.

4. The dynamo-electric machine according to claim 2 or 3, further comprising:
additional salient poles, each wound with a coil, in said space,
wherein each of said additional salient poles is disposed adjacent a respective one of said pole-pair groups at said angle θ1.

5. The dynamo-electric machine according to any one of claims 1 to 4, **characterized in that** the dynamo-electric machine is an outer-rotor type having the configuration in which the stator (3) is disposed at the inside of the rotor (2).

6. The dynamo-electric machine according to any one of claims 1 to 4, **characterized in that** the dynamo-electric machine is an inner-rotor type having the configuration in which the rotor is disposed at the inside of the stator.

7. The dynamo-electric machine according to any one of claims 1 to 6, **characterized in that** the dynamo-electric machine is a starter-generator for a motorcycle.

8. The dynamo-electric machine according to claim 1, wherein
the dynamo-electric machine functions as a generator, with a magnetic path formed between said circumferentially adjacent ones of said salient poles (14) of the same phase, at a time of power generation, being shorter than a magnetic path formed between circumferentially adjacent ones of salient poles for another dynamo-electric machine having the same number of poles of permanent magnets but having all of the salient poles being equally spaced,
such that coil inductance of the dynamo-electric machine is larger than coil inductance in the another dynamo-electric machine.

9. The dynamo-electric machine according to claim 8, wherein
the dynamo-electric machine functions as a generator, and when magnetic paths are formed between said circumferentially adjacent ones of said salient poles (14) of the same phase and between the salient poles (14) of one of said circumferentially adjacent ones of said salient poles and a circumferentially adjacent salient pole of an adjacent pole pair, the number of fluxes generated between said circumferentially adjacent ones of said salient poles of the same phase can be greater than fluxes generated between said one of said circumferentially adjacent ones of said salient poles and the circumferentially adjacent salient pole of the adjacent pole pair.

10. The dynamo-electric machine according to claim 1, wherein
the dynamo-electric machine functions as a generator, and when magnetic paths are formed between said circumferentially adjacent ones of said salient poles (14) of the same phase and between one of said circumferentially adjacent ones of said salient poles and a circumferentially adjacent salient pole of an adjacent pole pair, the number of fluxes generated between said circumferentially adjacent ones of said salient poles of the same phase can be greater than fluxes generated between said one of said circumferentially adjacent ones of said salient poles and the circumferentially adjacent salient pole of the adjacent pole pair.

11. The dynamo-electric machine according to claim 1, wherein
the dynamo-electric machine is constructed and arranged such that fluxes are passed between said circumferentially adjacent ones of said salient poles (14) of the same phase and between one of said circumferentially adjacent ones of said salient poles and a circumferentially adjacent salient pole of a different phase, when said circumferentially adjacent ones of said salient poles of the same phase face said permanent magnets.

12. A motorcycle engine comprising a dynamo-electric machine, according to any of the preceding claims, for use as a generator or starter motor.

## Patentansprüche

1. Dynamoelektrische Maschine (1) umfassend:
einen Stator (3) mit ausgeprägten Polen (14), die jeweils mit einer Spule (5) umwickelt sind;
einen Rotor (2), der an einem Außenumfang oder einem Innenumfang des Stators (3) drehbar angeordnet ist, wobei der Rotor (2) Permanentmagnete (4) aufweist, die daran entlang einer Umfangsrichtung davon befestigt sind; und
zwei Polpaargruppen (16a, 16b), die punktsymmetrisch in Bezug auf ein Zentrum (0) des Stators (3) angeordnet sind, wobei Raum für das Zulassen einer zusätzlichen Anordnung ausgeprägter Pole zwischen den beiden Polpaargruppen definiert ist,
wobei jede der zwei Polpaargruppen (16a, 16b) Polpaare (15Ua, 15 Va, 15 Wa; 15 Ub, 15 Vb, 15 Wb) enthält, die jeweils aus ringsum nebeneinander angeordneten ausgeprägten Polen (14) gleicher Phase bestehen, wobei jeder der ringsum nebeneinander angeordneten ausgeprägten Pole einem der Permanentmagnete (4) gegenüberliegt, der eine unterschiedliche Polarität in Bezug auf den einen der Permanentmagnete aufweist, dem ein anderer der ringsum nebeneinander angeordneten ausgeprägten Pole gegenüberliegt, wobei die ringsum nebeneinander angeordneten ausgeprägten Pole gleicher Phase den jeweiligen Permanentmagneten im gleichen elektrischen Winkel gegenüberliegen, und wobei die Anzahl der Polpaare der Anzahl der Phasen entspricht, wobei ein Winkel θ1 zwischen den ringsum nebeneinander angeordneten ausgeprägten Polen (14) gleicher Phase 360°/N entspricht, und ein Winkel θ2 zwischen ringsum nebeneinander angeordneten ausgeprägten Polen (14), die nicht die gleiche Phase haben, θ1+(θ1/P) entspricht, wobei P die Anzahl der Phasen und N die Anzahl der Pole der Permanentmagnete ist, und
wobei ein Winkel X jeder der zwei Polpaargruppen (16a, 16b) einem ganzzahligen Vielfachen eines Anordnungsintervalls der Permanentmagnete entspricht.

2. Die dynamoelektrische Maschine nach Anspruch 1, wobei
eine Wicklungsrichtung der Spule (5), die um den einen der ringsum nebeneinander angeordneten ausgeprägten Pole (14) gewickelt ist, entgegengesetzt zu einer Wicklungsrichtung der Spule ist, die um den anderen der ringsum nebeneinander angeordneten ausgeprägten Pole gewickelt ist.

3. Die dynamoelektrische Maschine nach Anspruch 2, wobei Px(θ1+θ2) gleich oder kleiner als 180° ist.

4. Die dynamoelektrische Maschine nach Anspruch 2 oder 3, ferner umfassend:
zusätzliche ausgeprägte Pole, die jeweils mit einer Spule umwickelt sind, in dem Raum,
wobei jeder der zusätzlichen ausgeprägten Pole neben einer jeweiligen der Polpaargruppen im Winkel θ1 angeordnet ist.

5. Die dynamoelektrische Maschine nach einem der Ansprüche 1 bis 4, **dadurch gekennzeichnet, dass** die dynamoelektrische Maschine ein Außenrotortyp mit der Ausgestaltung ist, bei der der Stator (3) an der Innenseite des Rotors (2) angeordnet ist.

6. Die dynamoelektrische Maschine nach einem der Ansprüche 1 bis 4, **dadurch gekennzeichnet, dass** die dynamoelektrische Maschine ein Innenrotortyp mit der Ausgestaltung ist, bei der der Rotor an der Innenseite des Stators angeordnet ist.

7. Die dynamoelektrische Maschine nach einem der Ansprüche 1 bis 6, **dadurch gekennzeichnet, dass** die dynamoelektrische Maschine ein Startergenerator für ein Motorrad ist.

8. Die dynamoelektrische Maschine nach Anspruch 1, wobei
die dynamoelektrische Maschine als Generator fungiert, wobei ein magnetischer Pfad, der zwischen den ringsum nebeneinander angeordneten ausgeprägten Polen (14) gleicher Phase gebildet wird, zur Zeit der Energieerzeugung kürzer ist als ein zwischen ringsum nebeneinander angeordneten ausgeprägten Polen gebildeter magnetischer Pfad für eine andere dynamoelektrische Maschine, die dieselbe Anzahl an Polen von Permanentmagneten hat, deren ausgeprägte Pole jedoch alle gleichmäßig beabstandet sind,
so dass die Spuleninduktivität der dynamoelektrischen Maschine größer als die Spuleninduktivität in der anderen dynamoelektrische Maschine ist.

9. Die dynamoelektrische Maschine nach Anspruch 8, wobei
die dynamoelektrische Maschine als Generator fungiert und wenn zwischen den ringsum nebeneinander angeordneten ausgeprägten Polen (14) gleicher Phase und zwischen den ausgeprägten Polen (14) eines der ringsum nebeneinander angeordneten ausgeprägten Pole und einem daneben angeordneten ausgeprägten Pol eines benachbarten Polpaares magnetische Pfade gebildet werden, die Anzahl von Flüssen, die zwischen den ringsum nebeneinander angeordneten ausgeprägten Polen gleicher Phase erzeugt werden, größer sein kann als die Anzahl von Flüssen, die zwischen dem einen der ringsum nebeneinander angeordneten ausgeprägten Pole und dem daneben angeordneten ausgeprägten Pol des benachbarten Polpaares erzeugt werden.

10. Die dynamoelektrische Maschine nach Anspruch 1, wobei
die dynamoelektrische Maschine als Generator fungiert und wenn zwischen den ringsum nebeneinander angeordneten ausgeprägten Polen (14) gleicher Phase und zwischen einem der ringsum nebeneinander angeordneten ausgeprägten Pole und einem daneben angeordneten ausgeprägten Pol eines benachbarten Polpaares magnetische Pfade gebildet werden, die Anzahl von Flüssen, die zwischen den ringsum nebeneinander angeordneten ausgeprägten Polen gleicher Phase erzeugt werden, größer sein kann als die Anzahl von Flüssen, die zwischen dem einen der ringsum nebeneinander angeordneten ausgeprägten Pole und dem daneben angeordneten ausgeprägten Pol des benachbarten Polpaares erzeugt werden.

11. Die dynamoelektrische Maschine nach Anspruch 1, wobei
die dynamoelektrische Maschine so konstruiert und angeordnet ist, dass Flüsse zwischen den ringsum nebeneinander angeordneten ausgeprägten Polen (14) gleicher Phase und zwischen einem der ringsum nebeneinander angeordneten ausgeprägten Pole und einem daneben angeordneten ausgeprägten Pol einer unterschiedlichen Phase geleitet werden, wenn die ringsum nebeneinander angeordneten ausgeprägten Pole gleicher Phase den Permanentmagneten gegenüberliegen.

12. Motorradmotor umfassend eine dynamoelektrische Maschine nach einem der vorangehenden Ansprüche zur Verwendung als Generator oder Anlasser.

## Revendications

1. Machine dynamo-électrique (1) comprenant :
un stator (3) ayant des pôles saillants (14), chacun enroulé avec une bobine (5) ;
un rotor (2) disposé en rotation sur l'une d'une circonférence extérieure et d'une circonférence intérieure dudit stator (3), ledit rotor (2) ayant des aimants permanents (4) fixés à celui-ci le long d'une direction circonférentielle de celui-ci ; et
deux groupes de paires de pôles (16a, 16b) disposés symétriquement point par point par rapport à un centre (0) dudit stator (3), avec un espace pour permettre un agencement supplémentaire de pôles saillants étant défini entre lesdits deux groupes de paires de pôles,
dans laquelle chacun desdits deux groupes de paires de pôles (16a, 16b) comporte des paires de pôles (15Ua, 15 Va, 15 Wa ; 15 Ub, 15 Vb, 15 Wb) composées chacune de pôles circonférentiellement adjacents parmi lesdits pôles saillants (14) qui sont de la même phase, avec chacun desdits pôles circonférentiellement adjacents parmi lesdits pôles saillants faisant face à l'un desdits aimants permanents (4) qui est de polarité différente par rapport à l'un desdits aimants permanents qui fait face à un autre desdits pôles circonférentiellement adjacents parmi lesdits pôles saillants, avec lesdits pôles circonférentiellement adjacents parmi lesdits pôles saillants qui sont de la même phase faisant face aux aimants respectifs parmi lesdits aimants permanents au même angle électrique, et avec le nombre de paires de pôles étant égal en nombre au nombre de phases,
dans laquelle un angle θ1 entre lesdits pôles circonférentiellement adjacents parmi lesdits pôles saillants (14) qui sont de la même phase est égal à 360°/N, et un angle θ2 entre des pôles circonférentiellement adjacents parmi lesdits pôles saillants (14) qui ne sont pas de la même phase est égal à θ1+(θ1/P), avec P étant le nombre de phases et N étant le nombre de pôles desdits aimants permanents, et
dans laquelle un angle X dudit chacun desdits deux groupes de paires de pôles (16a, 16b) est égal à un multiple entier d'un intervalle d'agencement desdits aimants permanents.

2. Machine dynamo-électrique selon la revendication 1, dans laquelle
une direction d'enroulement de la bobine (5) enroulée autour dudit chacun desdits pôles circonférentiellement adjacents parmi lesdits pôles saillants (14) est opposée à une direction d'enroulement de la bobine enroulée autour dudit autre desdits pôles circonférentiellement adjacents parmi lesdits pôles saillants.

3. Machine dynamo-électrique selon la revendication 2, dans laquelle
Px(θ1+θ2) est inférieur ou égal à 180°.

4. Machine dynamo-électrique selon la revendication 2 ou 3, comprenant en outre :
des pôles saillants supplémentaires, chacun enroulé avec une bobine, dans ledit espace,
dans laquelle chacun desdits pôles saillants supplémentaires est disposé de manière adjacente à un groupe respectif parmi lesdits groupes de paires de pôles au niveau dudit angle θ1.

5. Machine dynamo-électrique selon l'une quelconque des revendications 1 à 4, **caractérisée en ce que** la machine dynamo-électrique est de type à rotor extérieur ayant la configuration dans laquelle le stator (3) est disposé à l'intérieur du rotor (2).

6. Machine dynamo-électrique selon l'une quelconque des revendications 1 à 4, **caractérisée en ce que** la machine dynamo-électrique est de type à rotor intérieur ayant la configuration dans laquelle le rotor est disposé à l'intérieur du stator.

7. Machine dynamo-électrique selon l'une quelconque des revendications 1 à 6, **caractérisée en ce que** la machine dynamo-électrique est un démarreur-générateur pour un motocycle.

8. Machine dynamo-électrique selon la revendication 1, dans laquelle
les fonctions de machine dynamo-électrique en tant que générateur, avec un trajet magnétique formé entre lesdits pôles circonférentiellement adjacents parmi lesdits pôles saillants (14) de la même phase, à un instant de génération de puissance, étant plus court qu'un trajet magnétique formé entre des pôles circonférentiellement adjacents parmi lesdits pôles saillants pour une autre machine dynamo-électrique ayant le même nombre de pôles d'aimants permanents, mais ayant tous les pôles saillants étant équidistants,
de sorte que l'inductance de bobine de la machine dynamo-électrique soit supérieure à l'inductance de bobine dans l'autre machine dynamo-électrique.

9. Machine dynamo-électrique selon la revendication 8, dans laquelle
les fonctions de machine dynamo-électrique en tant que générateur, et lorsque des trajets magnétiques sont formés entre lesdits pôles circonférentiellement adjacents parmi lesdits pôles saillants (14) de la même phase et entre les pôles saillants (14) de l'un desdits pôles circonférentiellement adjacents parmi lesdits pôles saillants et un pôle saillant circonférentiellement adjacent d'une paire de pôles adjacents, le nombre de flux générés entre lesdits pôles circonférentiellement adjacents parmi lesdits pôles saillants de la même phase peut être plus grand que des flux générés entre ledit un desdits pôles circonférentiellement adjacents parmi lesdits pôles saillants et le pôle saillant circonférentiellement adjacent de la paire de pôles adjacents.

10. Machine dynamo-électrique selon la revendication 1, dans laquelle
les fonctions de machine dynamo-électrique en tant que générateur, et lorsque des trajets magnétiques sont formés entre lesdits pôles circonférentiellement adjacents parmi lesdits pôles saillants (14) de la même phase et entre l'un desdits pôles circonférentiellement adjacents parmi lesdits pôles saillants et un pôle saillant circonférentiellement adjacent d'une paire de pôles adjacents, le nombre de flux générés entre lesdits pôles circonférentiellement adjacents parmi lesdits pôles saillants de la même phase peut être plus grand que des flux générés entre ledit un desdits pôles circonférentiellement adjacents parmi lesdits pôles saillants et le pôle saillant circonférentiellement adjacent de la paire de pôles adjacents.

11. Machine dynamo-électrique selon la revendication 1, dans laquelle
la machine dynamo-électrique est construite et agencée de sorte que les flux passent entre lesdits pôles circonférentiellement adjacents parmi lesdits pôles saillants (14) de la même phase et entre l'un desdits pôles circonférentiellement adjacents parmi lesdits pôles saillants et un pôle saillant circonférentiellement adjacent d'une phase différente, lorsque lesdits pôles circonférentiellement adjacents parmi lesdits pôles saillants de la même phase font face à la même phase desdits aimants permanents.

12. Moteur de motocycle comprenant une machine dynamo-électrique, selon l'une des revendications précédentes pour une utilisation en tant que générateur ou moteur de démarreur.
